(19)

Europäisches
Patentamt
European
Patent Office
Office européen
des brevets

(11) **EP 4 465 210 A1**

(12) **EUROPEAN PATENT APPLICATION**

(43) Date of publication:
**20.11.2024 Bulletin 2024/47**

(51) International Patent Classification (IPC):
***G06N 5/02*** *(2023.01)*

(21) Application number: **23174338.6**

(22) Date of filing: **19.05.2023**

(52) Cooperative Patent Classification (CPC):
**G06N 5/02**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Robert Bosch GmbH**
**70442 Stuttgart (DE)**

(72) Inventors:
• **Kharlamov, Evgeny**
  **81827 Muenchen (DE)**
• **Zhou, Dongzhuoran**
  **76131 Karlsruhe (DE)**
• **Zheng, Zhuoxun**
  **76131 Karlsruhe (DE)**

(54) **DEVICE AND COMPUTER IMPLEMENTED METHOD FOR DETERMINING A LINK IN A KNOWLEDGE GRAPH**

(57)    Device and computer implemented method for determining a link in a knowledge graph, wherein the link comprises a first entity, a second entity and a relation, wherein the method comprises determining (206) a first representation, wherein the first representation represents an embedding of the first entity, selecting (208) a second representation from a set of representations of embeddings of entities of the knowledge graph, wherein the second representation represents an embedding of the second entity, and wherein selecting (208) the second representation comprises determining (208-1) a prediction for the second representation and selecting (208-2) the second representation depending on the prediction for the second representation, and determining (210) the link comprising the first entity, the second entity and the relation, wherein the first representation comprises multi-dimensional, in particular two-dimensional, vectors in hyperbolic spaces, in particular two-dimensional hyperbolic spaces, wherein determining (206) the first representation comprises splitting (206-1) the embedding of the first entity into a first set of multi-dimensional vectors, mapping (206-2) the vectors of the first set to the multi-dimensional vectors of the first representation depending on the relation, and wherein determining (208-1) the prediction for the second representation comprises rotating (208-11) and translating (208-12) the multi-dimensional vectors in the hyperbolic spaces depending on the relation.

Fig. 2

**Description**

Background

The invention relates to a device and a computer implemented method for determining a link in a knowledge graph.

Disclosure of the invention

The computer implemented method and the device according to the independent claims provide an improved prediction of previously unseen links in a knowledge graph.

The knowledge graph is a multi-relational graph that represents facts commonly in the form of triples (head entity h, relation r, and tail entity t). A knowledge graph embedding represents a knowledge graph numerically in distance space or neural networks via link prediction, enabling the possibility to leverage powerful machine learning for many downstream tasks, such as query answering, entity classification. A knowledge graph embedding in hyperbolic space can achieve very good performance even in a low-dimensional embedding space.

The computer implemented method for determining a link in a knowledge graph, wherein the link comprises a first entity, a second entity and a relation, wherein the method comprises determining a first representation, wherein the first representation represents an embedding of the first entity, selecting a second representation from a set of representations of embeddings of entities of the knowledge graph, wherein the second representation represents an embedding of the second entity, and wherein selecting the second representation comprises determining a prediction for the second representation and selecting the second representation depending on the prediction for the second representation, and determining the link comprising the first entity, the second entity and the relation, wherein the first representation comprises multi-dimensional, in particular two-dimensional, vectors in hyperbolic spaces, in particular two-dimensional hyperbolic spaces, wherein determining the first representation comprises splitting the embedding of the first entity into a first set of multi-dimensional vectors, mapping the vectors of the first set to the multi-dimensional vectors of the first representation depending on the relation, and wherein determining the prediction for the second representation comprises rotating and translating the multi-dimensional vectors in the hyperbolic spaces depending on the relation. The method provides a multi-fold extrapolation: to triples that are unseen in training, to entities that are under-represented in training data, and to relations that are under-represented in training data. The method improves the link prediction in low-dimensional space. The method supports strong composition.

The link comprises a head entity, the first entity, and a tail entity, the second entity. The method decomposes the embedding of the head entity in a manifold M to sub-vectors in component spaces of a product space P, and performs relation-specific translation and rotation to the sub-vectors to determine the prediction for the second representation. The second representation is selected based on the resulting translated and rotated sub-vectors.

In some embodiments, the prediction for the second representation comprises multi-dimensional, in particular two-dimensional, vectors, in the hyperbolic spaces wherein the second representation comprises multi-dimensional, in particular two-dimensional, vectors in the hyperbolic spaces, and wherein selecting the second representation comprises determining differences between the multi-dimensional vectors of the second representation and the multi-dimensional vectors of the prediction for the second representation that are in the same hyperbolic space, determining a distance depending on the differences and selecting the second representation depending on the distance. The distance is determined depending on the translated and rotated sub-vectors. The second representation may be a given ground truth or may be determined depending on the embedding or the second entity.

In some embodiments, determining the distance comprises concatenating the multi-dimensional vectors of the prediction for the second representation, concatenating the multi-dimensional vectors of the second representation, and determining the distance depending on the concatenated multi-dimensional vectors of the prediction for the second representation and the concatenated multi-dimensional vectors of the second representation. For example, the translated and rotated sub-vectors are concatenated and the distance to the concatenated vectors representing the embedding of the second entity is determined.

In some embodiments, determining the first representation comprises mapping the vectors of the first set to different hyperbolic spaces.

In some embodiments, a curvature of at least one of the hyperbolic spaces is defined by the relation. This means the curvature is a learnable parameter.

In some embodiments, an extend of a rotation in at least one of the hyperbolic spaces is defined by defined by the relation. This means the extend of the rotation is a learnable parameter.

In some embodiments, an extend of a translation in at least one of the hyperbolic spaces is defined by defined by the relation. This means the extend of the translation is a learnable parameter.

In some embodiments, the method comprises providing the relation, wherein the relation comprises one parameter per hyperbolic space that defines an extend of rotating, an extend of translating and/or a curvature of the hyperbolic space. In inference, the relation, i.e. at least one learned parameter, is provided for determining the second entity for a given first entity.

In some embodiments, the method comprises determining the set of representations of embeddings of entities of the knowledge graph, wherein determining the set of representations of embeddings comprises splitting the respective embedding into a set of multi-dimensional vectors, mapping the vectors of the respective set to the multi-dimensional vectors to the respective representation, in particular depending on the relation. The other entities, including the second entity, is embedded and the respective embedding is represented by the mapping of the respective set of multi-dimensional vectors into the hyperbolic spaces.

In some embodiments, the method comprises training a model for mapping the first entity to the first representation depending on the relation, for mapping the second entity to the second representation depending on the relation, for rotating and translating the first representation in the hyperbolic spaces depending on the relation, and for selecting the second entity depending on the prediction for the second representation and depending on the second representation, or selecting the second entity with the model.

In some embodiments, the method comprises determining a control signal for controlling a technical system, in particular a physical system, preferably a computer-controlled machine, in particular a robotic system, a vehicle, a domestic appliance, a power tool, a manufacturing machine, a personal assistant or an access control system, depending on the link, or classifying sensor data in particular for detecting the presence of objects in the sensor data or performing a semantic segmentation on the sensor data, preferably regarding traffic signs, road surfaces, pedestrians, vehicles, depending on the link, or analyzing data, in particular scalar time series data, preferably from a sensor, depending on the link, or determining a state of a technical system depending on the link.

The device for determining a link in a knowledge graph comprises at least one processor and at least one storage, wherein the at least one processor is configured to execute instructions that, when executed by the at least one processor cause the at least one processor to execute the method, wherein the at least one storage is configured to store the instructions.

A computer program comprises computer readable instructions that, when executed by a computer, cause the computer to perform the steps of the method.

Further embodiments are derivable from the following description and the drawing. In the drawing:

Fig. 1    schematically depicts a device for determining a link in a knowledge graph,

Fig. 2    depicts a flowchart of a computer implemented method for determining a link in a knowledge graph.

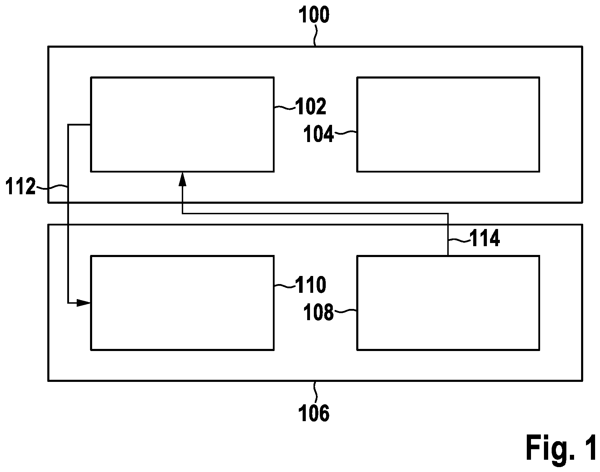

Figure 1 schematically depicts a device 100 for determining a link in a knowledge graph. The link comprises for example a head entity, i.e. a first entity of the triples in the knowledge graph, and a tail entity, i.e. a second or last entity of the triples in the knowledge graph, and their relation.

The device 100 comprises at least one processor 102 and at least one storage 104.

The at least one processor 102 is configured to execute instructions that, when executed by the at least one processor 102 cause the at least one processor 102 to execute a computer implemented method for determining the link in the knowledge graph.

The at least one storage 104 is configured to store the instructions.

In the example, the at least one storage 104 is configured to store the knowledge graph.

The knowledge graph comprises a plurality of entities and relations. The knowledge graph comprises for example more than 1000, more than 10000, or more than 100000 entities. The knowledge graph comprises a plurality of entities and relations. The knowledge graph comprises for example more than 1000, more than 10000, or more than 100000 relations.

A knowledge graph embedding model, is an integral part of a link prediction task based on a knowledge graph embedding. Specifically, the usage of this model is two-fold, first it can be used to train the embeddings of entities and relations in a knowledge graph dataset. Second, it can also be used to generate the similarity of the predicted object (or subject) from <subject, relation> (or <object, relation>) and the true object (or subject). In link prediction tasks, given subject and relation, the trained embeddings of entities and relations are fed into the model to calculate a predicted object embedding, which is further compared with all the entities in the dataset. The entity whose embedding is nearest to the predicted embedding, are selected as the predicted answer, i.e. the missing object.

A knowledge graph KG is a multi-relational graph, denoted as G = (E, R, F), where E is a set of entities, i.e. nodes of the graph, R is a set of binary relations, i.e. types of edges of the graph, between entities, and F is a set of facts, i.e. edges of the graph, given in the triple form of $(h, r, t) \in F \subseteq E \times R \times E$, with h denoting a head entity and t denoting a tail entity.

A common setting of KGE problem seeks to solve the problem of link prediction: (h, r, ?) (or (?, r, t)), namely given the query of the head entity (or tail entity) and the relation, to find the most probable tail entity (or head entity).

Thus, a KGE problem is defined as finding a function

KGE : (h, r) → t.

For simplicity, the query in both two directions is denoted as (h, r) → t.

Let (M, G, s) be an embedding space, where M is a distance space, G is a set of mappings that have domain and range defined on M, and s is a scoring function: $s : M \times G \times M \to R$. The KGE problem aims to find an embedding from G = (E, R, F) to (M, G, s) that (i) maps entities h, $t \in E$ to points, i.e. vectors $e_h$, $e_t \in M$; (ii) maps each relation $r \in$ R to a map $g\,r \in G$ such that $s(e_h, g_r, e_t$ ranks how probable it is that (h, r, t) $\in$ F.

Figure 1 schematically depicts a technical system 106. The technical system 106 may comprise a sensor 108 and/or an actuator 110.

The device 100 may be configured to determine a control signal 112 for controlling the technical system 106 depending on the link. The device 100 may be configured to receive data 114 from the sensor 108.

The technical system 106 is for example a physical system.

The technical system 106 is for example a computer-controlled machine, in particular a robotic system, a vehicle, a domestic appliance, a power tool, a manufacturing machine, a personal assistant or an access control system.

The technical system 106 may be configured to classify sensor data 114 for detecting the presence of objects in the sensor data 114 depending on the link.

The technical system 106 may be configured to classify sensor data 114 for performing a semantic segmentation on the sensor data 114 depending on the link.

The link provides for example a tail entity representing additional information about an object, wherein the tail entity has a given relation to a head entity that represents a class of the object that is detected in the classification or the semantic segmentation.

The technical system 106 may be configured to classify or perform the semantic segmentation of the sensor data 114 regarding traffic signs, road surfaces, pedestrians, vehicles.

The technical system 106 may be configured to analyze the data 114 depending on the link. The data 114 that is analyzed may be scalar time series data. The scalar time series data may be measured by the sensor 108.

The technical system 106 may be configured to determine a state of the technical system 106 depending on the link.

The link provides for example a tail entity representing a result of analyzing or the state, wherein the tail entity according to the link has a given relation to a head entity that represents the data 114 that is analyzed.

The control signal 112 may be determined to control the technical system 106 depending on an object or objects or state detected based on the sensor data 114 and the link. The control signal 112 may be determined to control the technical system 106 to react to or avoid the object or objects, or to change the state, e.g. to a safe or turned off state of the technical system 106.

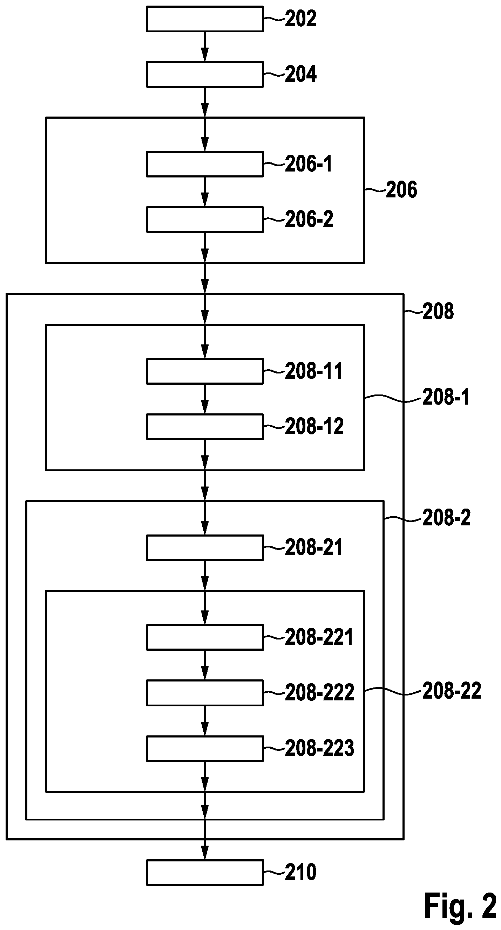

Figure 2 depicts a flowchart of the computer implemented method.

The method is described for two-dimensional vectors. The method may use multi-dimensional vectors, i.e. vectors of three or more dimensions.

The method is described for two-dimensional hyperbolic spaces. The method may use multi-dimensional hyperbolic spaces, i.e. hyperbolic spaces of three or more dimensions, wherein the vectors have the same amount of dimensions as the hyperbolic spaces.

The method comprises a step 202.

The step 202 comprises providing the knowledge graph. The knowledge graph comprises a set of entities, including a first entity and a second entity.

The method comprises a step 204.

The step 204 comprises providing the first entity and the relation.

For example, a query for the second entity is provided in order to determine the second entity that is linked to the first entity by the relation.

The relation may comprise one parameter per hyperbolic space that defines an extend of rotating, an extend of translating and/or a curvature of the hyperbolic space.

The method comprises a step 206.

The step 206 comprises determining a set of representations of embeddings of entities of the knowledge graph including a first representation and a second representation.

The first representation represents an embedding of the first entity. The first representation comprises two-dimensional vectors in two-dimensional hyperbolic spaces.

The second representation represents an embedding of the second entity. The second representation comprises two-dimensional vectors in two-dimensional hyperbolic spaces.

Determining the first representation comprises a step 206-1.

The step 206-1 comprises splitting the respective embedding into a set of multi-dimensional vectors.

In an example, wherein the embedding dimension is 32, an embedding is split into 16 two-dimensional vectors.

The vectors may be split depending on the relation.

This means, the step 206-1 comprises splitting the embedding of the first entity into a first set of multi-dimensional vectors.

This means, the step 206-1 comprises splitting the embedding of the second entity into a second set of multi-dimensional vectors.

Determining the first representation comprises a step 206-2.

The step 206-2 comprises mapping the vectors of the respective set to the multi-dimensional vectors to the respective representation.

The vectors may be mapped depending on the relation.

This means, the step 206-2 comprises mapping the vectors of the first set to the multi-dimensional vectors of the first representation.

This means, the step 206-2 comprises mapping the vectors of the second set to the multi-dimensional vectors of the second representation.

Determining the first representation may comprise mapping the vectors of the first set to different hyperbolic spaces.

A curvature of at least one of the hyperbolic spaces may be defined by the relation.

The method comprises a step 208.

The step 208 comprises selecting a second representation from a set of representations of embeddings of entities of the knowledge graph.

The second representation represents an embedding of the second entity.

The second representation comprises two-dimensional vectors in the two-dimensional hyperbolic spaces.

Selecting the second representation comprises a step 208-1.

The step 208-1 comprises determining a prediction for the second representation.

The prediction for the second representation comprises two-dimensional vectors in the two-dimensional hyperbolic space.

Determining the prediction for the second representation comprises a step 208-11.

The step 208-11 comprises rotating the multi-dimensional vectors in the hyperbolic spaces depending on the relation.

An extend of a rotation in at least one of the hyperbolic spaces may be defined by defined by the relation.

Determining the prediction for the second representation comprises a step 208-12.

The step 208-12 comprises translating the multi-dimensional vectors in the hyperbolic spaces depending on the relation.

An extend of a translation in at least one of the hyperbolic spaces may be defined by defined by the relation.

Selecting the second representation comprises a step 208-2.

The step 208-2 comprises selecting the second representation depending on the prediction for the second representation.

Selecting the second representation comprises a step 208-21.

The step 208-21 comprises determining differences between the multi-dimensional vectors of the second representation and the multi-dimensional vectors of the prediction for the second representation that are in the same hyperbolic space.

Selecting the second representation comprises a step 208-22.

The step 208-22 comprises determining a distance depending on the differences.

Determining the distance may comprise a step 208-221.

The step 208-221 comprises concatenating the multi-dimensional vectors of the prediction for the second representation.

Determining the distance may comprise a step 208-222.

The step 208-222 comprises concatenating the multi-dimensional vectors of the second representation.

Determining the distance may comprise a step 208-223.

The step 208-223 comprises determining the distance depending on the concatenated multi-dimensional vectors of the prediction for the second representation and the concatenated multi-dimensional vectors of the second representation.

Selecting the second representation comprises a step 208-23.

The step 208-23 comprises selecting the second representation depending on the distance.

An exemplary distance $d_p$ is determined from

$$d_p(e_h, e_l)^2 = \sum_{i=1}^{d/n} \frac{2}{\sqrt{k}} \text{arctanh}\left(\sqrt{k} \| -e_h^i \oplus^k e_l^i \|\right)^2$$

wherein $\oplus^k$ indicates the Möbius addition of the prediction $e_h^i$ for the second representation and a representation $e_l^i$ of one of the entities of the knowledge graph in Riemannian space with curvature $k$, wherein the representations have dimensions of d and n is the dimension of the hyperbolic spaces, e.g. n=2 for the two-dimensional hyperbolic space.

For example, the entity of the knowledge graph is selected as second entity, whose representation is closest to the predicted second representation.

The method comprises a step 210.

The step 210 comprises determining the link comprising the first entity, the second entity and the relation.

The method may comprise a step 212.

The step 212 comprises a use of the link.

For example, the method comprises determining the control signal 112 for controlling the technical system 106 depending on the link.

For example, the method comprises classifying the sensor data 114, in particular for detecting the presence of objects in the sensor data 114 depending on the link.

For example, the method comprises performing a semantic segmentation on the sensor data 114 depending on the link, preferably regarding traffic signs, road surfaces, pedestrians, vehicles.

For example, the method comprises analyzing data 114 depending on the link, in particular scalar time series data.

For example, the method comprises determining the state of the technical system 106 or the sensor 108 depending on the link.

The method may comprise receiving the data 114 from the sensor 108.

The method may comprise sending the control signal 112 to the actuator 110.

The sensor 108 may be configured to sense data in the surroundings of the technical system 106 or data characterizing the state of the technical system 106 or of an environment of the technical system 106. The sensor 108 is for example configured to capture data representing a digital image, e.g. a video, a radar, a LiDAR, a ultrasonic or an infrared image.

The actuator 110 may be configured to operate the technical system 106 or a part thereof.

The method may comprise training a model for mapping an entity of the knowledge graph to a representation of the entity in the two-dimensional hyperbolic spaces.

The method may comprise training the model to map the entity to an embedding of the entity. The method may comprise training the model to map the embedding to the set of two-dimensional vectors.

The method may comprise training the model to map a vector of the set of two-dimensional vectors to a two-dimensional hyperbolic space.

This means, the model may be configured for mapping the first entity to the first representation.

This means, the model may be configured for mapping the second entity to the second representation.

The method may comprise training the model for determining a result of the mapping depending on the relation.

The method may comprise training the model for rotating and translating the first representation in the hyperbolic spaces depending on the relation.

The method may comprise training the model for determining the second entity depending on the prediction for the second representation and depending on the second representation.

This means the model may be configured for determining the second entity depending on the prediction for the second representation and depending on the second representation.

The method may comprise training the model for selecting the second entity with the model.

This means the model may be configured for selecting the second entity depending on the first entity and the relation.

The model may comprise a neural network, in particular a deep neural network.

**Claims**

1. Computer implemented method for determining a link in a knowledge graph, wherein the link comprises a first entity, a second entity and a relation, **characterized in that** the method comprises determining (206) a first representation, wherein the first representation represents an embedding of the first entity, selecting (208) a second representation from a set of representations of embeddings of entities of the knowledge graph, wherein the second representation represents an embedding of the second entity, and wherein selecting (208) the second representation comprises determining (208-1) a prediction for the second representation and selecting (208-2) the second representation depending on the prediction for the second representation, and determining (210) the link comprising the first entity, the second entity and the relation, wherein the first representation comprises multi-dimensional, in particular two-dimensional, vectors in hyperbolic spaces, in particular two-dimensional hyperbolic spaces, wherein determining (206) the first representation comprises splitting (206-1) the embedding of the first entity into a first set of multi-dimensional vectors, mapping (206-2) the vectors of the first set to the multi-dimensional vectors of the first representation depending on the relation, and wherein determining (208-1) the prediction for the second representation comprises rotating (208-11) and translating (208-12) the multi-dimensional vectors in the hyperbolic spaces depending on the relation.

2. The method according to claim 1, **characterized in that** the prediction for the second representation comprises multi-dimensional, in particular two-dimensional, vectors, in the hyperbolic spaces wherein the second representation comprises multi-dimensional, in particular two-dimensional, vectors in the hyperbolic spaces, and wherein selecting (208-2) the second representation comprises determining (208-21) differences between the multi-dimensional vectors of the second representation and the multi-dimensional vectors of the prediction for the second representation that are in the same hyperbolic space, determining (208-22) a distance depending on the differences and selecting (208-23) the second representation depending on the distance.

3. The method according to claim 2, **characterized in that** determining (208-22) the distance comprises concatenating (208-221) the multi-dimensional vectors of the prediction for the second representation, concatenating (208-222) the multi-dimensional vectors of the second representation, and determining (208-223) the distance depending on the concatenated multi-dimensional vectors of the prediction for the second representation and the concatenated multi-dimensional vectors of the second representation.

4. The method according to one of the previous claims, **characterized in that** determining (206-1) the first representation comprises mapping (206-2) the vectors of the first set to different hyperbolic spaces.

5. The method according to one of the previous claims, **characterized in that** a curvature of at least one of the hyperbolic spaces is defined by the relation.

6. The method according to one of the previous claims, **characterized in that** an extend of a rotation in at least one of the hyperbolic spaces is defined by defined by the relation.

7. The method according to one of the previous claims, **characterized in that** an extend of a translation in at least one of the hyperbolic spaces is defined by defined by the relation.

8. The method according to one of the previous claims, **characterized in that** the method comprises providing (204) the relation, wherein the relation comprises one parameter per hyperbolic space that defines an extend of rotating, an extend of translating and/or a curvature of the hyperbolic space.

9. The method according to one of the previous claims, **characterized in that** the method comprises determining (206) the set of representations of embeddings of entities of the knowledge graph, wherein determining (206) the set of representations of embeddings comprises splitting (206-1) the respective embedding into a set of multi-dimensional vectors, mapping (206-2) the vectors of the respective set to the multi-dimensional vectors to the respective representation, in particular depending on the relation.

10. The method according to one of the previous claims, **characterized in that** the method comprises training a model for mapping the first entity to the first representation depending on the relation, for mapping the second entity to the second representation depending on the relation, for rotating and translating the first representation in the hyperbolic spaces depending on the relation, and for determining the second entity depending on the prediction for the second representation and depending on the second representation, or selecting the second entity with the model.

11. The method according to one of the previous claims, **characterized in that** the method comprises determining (212) a control signal (112) for controlling a technical system (106), in particular a physical system, preferably a computer-controlled machine, in particular a robotic system, a vehicle, a domestic appliance, a power tool, a manufacturing machine, a personal assistant or an access control system, depending on the link, or classifying (212) sensor data (114) in particular for detecting the presence of objects in the sensor data (114) or performing (212) a semantic segmentation on the sensor data (114), preferably regarding traffic signs, road surfaces, pedestrians, vehicles, depending on the link, or analyzing data (114), in particular scalar time series data, preferably from a sensor (108), depending on the link, or determining (212) a state of a technical system (106) depending on the link.

12. A device (100) for determining a link in a knowledge graph, **characterized in that** the device (100) comprises at least one processor (102) and at least one storage (104), wherein the at least one processor (102) ist configured to execute instructions that, when executed by the at least one processor (102) cause the at least one processor (102) to execute the method according to one of the previous claims, wherein the at least one storage (104) is configured to store the instructions.

13. A computer program, wherein the computer program comprises computer readable instructions that, when executed by a computer, cause the computer to perform the steps of the method according to one of the claims 1 to 12.

Fig. 1

**Fig. 2**

Europäisches
Patentamt
European
Patent Office
Office européen
des brevets

## EUROPEAN SEARCH REPORT

Application Number

EP 23 17 4338

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | INES CHAMI ET AL: "Low-Dimensional Hyperbolic Knowledge Graph Embeddings", ARXIV.ORG, CORNELL UNIVERSITY LIBRARY, 201 OLIN LIBRARY CORNELL UNIVERSITY ITHACA, NY 14853, 1 May 2020 (2020-05-01), XP081657105, * section 1, lines 56-57 * * sections 3.1 - 3.2 * * section 4, lines 5-6 * * section 4.4, lines 16-18 * * section 5.1, lines 1-3 * * section 5.2, lines 1-4 * * equations (8)-(9) *  ----- | 1-13 | INV. G06N5/02 |
| A | LIN MENGQI ET AL: "Survey on Knowledge Graph Embedding Based on Hyperbolic Geometry", 2021 IEEE SIXTH INTERNATIONAL CONFERENCE ON DATA SCIENCE IN CYBERSPACE (DSC), IEEE, 9 October 2021 (2021-10-09), pages 152-158, XP034110872, DOI: 10.1109/DSC53577.2021.00028 * the whole document *  ----- | 1-13 | |

TECHNICAL FIELDS
SEARCHED      (IPC)

G06N

The present search report has been drawn up for all claims

| Place of search | Date of completion of the search | Examiner |
|---|---|---|
| The Hague | 22 September 2023 | Aoun, Marc |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P04C01)